# EUROPEAN PATENT APPLICATION

(11) **EP 4 135 452 A1**
(43) Date of publication of application: **15.02.2023**
(21) Application number: 21796117.6
(22) Date of filing: 31.03.2021
(51) Int. Cl.: H04W 72/04

(54) **COMMUNICATION METHOD, APPARATUS AND SYSTEM**

(30) Priority: 30.04.2020 CN 202010360871
(71) Applicant: Huawei Technologies Co., Ltd., Shenzhen, Guangdong 518129 (CN)
(72) Inventor: LI, Xinxian, Shenzhen, Guangdong 518129 (CN); PENG, Jinlin, Shenzhen, Guangdong 518129 (CN); ZHOU, Guohua, Shenzhen, Guangdong 518129 (CN)
(74) Representative: Isarpatent
(86) International application number: PCT/CN2021/084595
(87) International publication number: WO 2021/218559

(57) **Abstract**

Embodiments of this application provide a communication method, apparatus, and system. The method includes: A network device sends first signaling to a terminal device on a downlink primary component carrier, where the first signaling includes configuration information of a secondary cell; the network device sends second signaling to the terminal device; and the network device determines, based on a channel state information CSI report and/or feedback signaling received from the terminal device, that the terminal device successfully activates the secondary cell. In this solution, the terminal device may activate the secondary cell without receiving, from the network device, related information used to perform channel measurement. In other words, the terminal device may perform downlink synchronization with a downlink secondary component carrier based on synchronization information of the downlink primary component carrier. In this solution, steps of activating the secondary cell by the network device for the terminal device can be reduced, and time for changing the secondary cell from an inactive state to an active state is extremely shortened. Therefore, communication overheads between the terminal device and the network device are further reduced while a cell is quickly activated.

## Description

### CROSS-REFERENCE TO RELATED APPLICATIONS

This application claims priority to Chinese Patent Application No. 202010360871 .X, filed with the China National Intellectual Property Administration on April 30, 2020 and entitled "COMMUNICATION METHOD, APPARATUS, AND SYSTEM", which is incorporated herein by reference in its entirety.

### TECHNICAL FIELD

Embodiments of this application relate to the field of communication technologies, and in particular, to a communication method, apparatus, and system.

### BACKGROUND

As a quantity of intelligent terminal users constantly grows, and a user service volume and a data throughput constantly increase, a higher requirement is imposed on a communication rate. To meet requirements for higher downlink and uplink peak rates, a higher transmission bandwidth needs to be provided. Because a high-bandwidth continuous spectrum is scarce, a carrier aggregation (Carrier Aggregation, CA) solution is proposed. Carrier aggregation aggregates two or more component carriers (Component Carriers, CCs) together to support a higher transmission bandwidth. The carrier aggregation includes carrier aggregation between different cells served by a single base station, and carrier aggregation between different cells served by different base stations in a dual connectivity (dual connectivity, DC) scenario.

Currently, when a plurality of cells are configured for one terminal device, how to perform further optimization to reduce communication overheads between the terminal device and a network device is a problem that needs to be resolved.

### SUMMARY

Embodiments of this application provide a communication method, apparatus, and system, to reduce communication overheads between a terminal device and a network device in a carrier aggregation scenario.

According to a first aspect, an embodiment of this application provides a communication method. The communication method includes: A network device sends first signaling to a terminal device on a downlink primary component carrier, where the first signaling includes configuration information of a secondary cell, and the configuration information of the secondary cell includes information about a downlink secondary component carrier, or includes information about a downlink secondary component carrier and information about an uplink secondary component carrier. The network device sends second signaling to the terminal device, where the second signaling is used by the terminal device to activate the secondary cell. The network device determines, based on a channel state information CSI report and/or feedback signaling received from the terminal device, that the terminal device successfully activates the secondary cell, where the feedback signaling is used to indicate feedback information of the second signaling; time-frequency domain synchronization information of the downlink primary component carrier is the same as time-frequency domain synchronization information of the downlink secondary component carrier, or a difference between time-frequency domain synchronization information of the downlink primary component carrier and time-frequency domain synchronization information of the downlink secondary component carrier is less than a first threshold; and a CSI value of the downlink primary component carrier is the same as a CSI value of the downlink secondary component carrier, or a difference between a CSI value of the downlink primary component carrier and a CSI value of the downlink secondary component carrier is less than a second threshold.

According to the foregoing solution, because the synchronization information of the downlink secondary component carrier is the same as or similar to the synchronization information of the downlink primary component carrier, the terminal device may activate the secondary cell without receiving, from the network device, related information used to perform channel measurement. In other words, the terminal device may perform downlink synchronization with the downlink secondary component carrier based on the synchronization information of the downlink primary component carrier. In this solution, steps of activating the secondary cell by the network device for the terminal device can be reduced, and time for changing the secondary cell from an inactive state to an active state is extremely shortened. Therefore, communication overheads between the terminal device and the network device are further reduced while a cell is quickly activated.

In a possible implementation method, that the network device determines, based on a CSI report and/or feedback signaling received from the terminal device, that the terminal device successfully activates the secondary cell includes: If the network device receives the CSI report from the terminal device, and the CSI report is a valid CSI report, determining that the terminal device successfully activates the secondary cell; the network device determines, at a first moment, that the terminal device successfully activates the secondary cell, where an interval between the first moment and time at which the feedback signaling is received is greater than or equal to first specified duration; or if the network device receives the CSI report at a second moment, and the CSI report is a valid CSI report, determining that the terminal device successfully activates the secondary cell, where an interval between the second moment and time at which the feedback signaling is received is greater than or equal to second specified duration.

In a possible implementation method, the first specified duration is equal to (a quantity of slots in one subframe that correspond to a subcarrier spacing + 1) ^{∗} duration of one slot, the subcarrier spacing is a subcarrier spacing corresponding to a physical uplink control channel PUCCH, and the PUCCH is used to carry the feedback information of the second signaling.

In a possible implementation method, the second specified duration is equal to (a quantity of slots in one subframe that correspond to a subcarrier spacing + 1) ^{∗} duration of one slot, the subcarrier spacing is a subcarrier spacing corresponding to a PUCCH, and the PUCCH is used to carry the feedback information of the second signaling.

According to a second aspect, an embodiment of this application provides a communication method. The communication method includes: A terminal device receives first signaling from a network device on a downlink primary component carrier, where the first signaling includes configuration information of a secondary cell, and the configuration information of the secondary cell includes information about a downlink secondary component carrier, or includes information about a downlink secondary component carrier and information about an uplink secondary component carrier. The terminal device receives second signaling from the network device, where the second signaling is used by the terminal device to activate the secondary cell. The terminal device sends a channel state information CSI report and/or feedback signaling to the network device, where the feedback signaling is used to indicate feedback information of the second signaling; time-frequency domain synchronization information of the downlink primary component carrier is the same as time-frequency domain synchronization information of the downlink secondary component carrier, or a difference between time-frequency domain synchronization information of the downlink primary component carrier and time-frequency domain synchronization information of the downlink secondary component carrier is less than a first threshold; and a CSI value of the downlink primary component carrier is the same as a CSI value of the downlink secondary component carrier, or a difference between a CSI value of the downlink primary component carrier and a CSI value of the downlink secondary component carrier is less than a second threshold.

The terminal device may perform downlink synchronization with the downlink secondary component carrier based on the time-frequency domain synchronization information of the downlink primary component carrier and configuration information of the downlink secondary component carrier.

According to the foregoing solution, because the synchronization information of the downlink secondary component carrier is the same as or similar to the synchronization information of the downlink primary component carrier, the terminal device may activate the secondary cell without receiving, from the network device, related information used to perform channel measurement. In other words, the terminal device may perform downlink synchronization with the downlink secondary component carrier based on the synchronization information of the downlink primary component carrier. In this solution, steps of activating the secondary cell by the network device for the terminal device can be reduced, and time for changing the secondary cell from an inactive state to an active state is extremely shortened. Therefore, communication overheads between the terminal device and the network device are further reduced while a cell carrier is quickly activated.

According to the first aspect, any possible implementation method of the first aspect, the second aspect, or any possible implementation method of the second aspect, the following possible implementation methods are described.

In a possible implementation method, the first signaling is media access control control element MAC CE signaling, radio resource control RRC signaling, or downlink control information DCI signaling.

In a possible implementation method, the second signaling is MAC CE signaling, radio resource control RRC signaling, or downlink control information DCI signaling.

According to a third aspect, an embodiment of this application provides a communication method. The communication method includes: A network device determines first downlink control information DCI, where the first DCI is used to schedule M data channels, the M data channels are mapped to N carriers, the N carriers are used for data transmission on the M data channels, one of the M data channels is mapped to at least one carrier of the N carriers, M is a positive integer, and N is an integer greater than 1. The network device sends the first DCI to a terminal device. According to the foregoing solution, because one piece of DCI can be used to schedule a plurality of carriers, compared with that one piece of DCI is used to schedule only one carrier, when a same quantity of carriers need to be scheduled, fewer pieces of DCI are required in the method in this application, so that signaling overheads between the terminal device and the network device can be reduced. In other words, compared with a single-carrier scheduling solution, a multi-carrier scheduling solution in this application can reduce signaling overheads between the terminal device and the network device.

In a possible implementation method, the network device determines second DCI, where the second DCI is used to schedule K data channels, the K data channels are mapped to one carrier, the one carrier is used for data transmission on the K data channels, and K is a positive integer. The network device sends the second DCI to the terminal device, where a scrambling identifier corresponding to the first DCI is different from a scrambling identifier corresponding to the second DCI.

In a possible implementation method, the first DCI includes a first identifier field, and the first identifier field is used to indicate that the first DCI is used for scheduling the N carriers.

In a possible implementation method, the network device sends radio resource control RRC signaling to the terminal device, where the RRC signaling is used to indicate that the first DCI is used for scheduling the N carriers.

According to a fourth aspect, an embodiment of this application provides a communication method. The communication method includes: A terminal device receives first downlink control information DCI from a network device, where the first DCI is used to schedule M data channels, the M data channels are mapped to N carriers, the N carriers are used for data transmission on the M data channels, one of the M data channels is mapped to at least one carrier of the N carriers, M is a positive integer, and N is an integer greater than 1. The terminal device communicates with the network device on at least two of the N carriers based on the first DCI.

According to the foregoing solution, because one piece of DCI can be used to schedule a plurality of carriers, compared with that one piece of DCI is used to schedule only one carrier, when a same quantity of carriers need to be scheduled, fewer pieces of DCI are required in the method in this application, so that signaling overheads between the terminal device and the network device can be reduced. In other words, compared with a single-carrier scheduling solution, a multi-carrier scheduling solution in this application can reduce signaling overheads between the terminal device and the network device.

In a possible implementation method, the terminal device receives second DCI from the network device, where the second DCI is used to schedule K data channels, the K data channels are mapped to one carrier, the one carrier is used for data transmission on the K data channels, and K is a positive integer. The terminal device communicates with the network device on the one carrier based on the second DCI, where a scrambling identifier corresponding to the first DCI is different from a scrambling identifier corresponding to the second DCI. In the method, the second DCI used for single-carrier scheduling and the first DCI used for multi-carrier scheduling are distinguished by using different scrambling identifiers, so that the DCI does not need to be modified, and implementation is simple.

In a possible implementation method, the first DCI includes a first identifier field, and the first identifier field is used to indicate that the first DCI is used for scheduling the N carriers. In this solution, a new first identifier field is added to indicate that the first DCI is used for scheduling the N carriers, so that implementation is simple and flexible.

In a possible implementation method, the terminal device receives radio resource control RRC signaling from the network device, where the RRC signaling is used to indicate that the first DCI is used for scheduling the N carriers. In this solution, the RRC signaling is used to indicate that the first DCI is used for scheduling the N carriers, and there is no need to add a new indicator field to the first DCI to indicate that the first DCI is used for scheduling the N carriers, so that DCI overheads can be reduced.

According to the third aspect, any implementation method of the third aspect, the fourth aspect, or any implementation method of the fourth aspect, the following possible implementation methods are described.

In a possible implementation method, the N carriers include a carrier used to send the first DCI and other N-1 carriers, and the other N-1 carriers are configured by using the RRC signaling; the N carriers are configured by using the RRC signaling; the first DCI includes N-1 carrier indicator fields, the N carriers include a carrier used to send the first DCI and other N-1 carriers, and the N-1 carrier indicator fields are used to indicate the other N-1 carriers; or the first DCI includes one carrier indicator field, the carrier indicator field is used to indicate an index of one carrier group, the carrier group includes the N carriers, and the carrier group is configured by using the RRC signaling.

In a possible implementation method, the first DCI includes one BWP indicator field, and the BWP indicator field is used to indicate N BWPs that are on the N carriers and that have a same index; the first DCI includes one BWP group indicator field, the BWP group indicator field is used to indicate an index of one BWP group, and the BWP group includes at least one BWP on each of the N carriers; or the first DCI includes N BWP indicator fields, and the N BWP indicator fields are used to indicate N BWPs on the N carriers.

According to a fifth aspect, an embodiment of this application provides a communication apparatus. The apparatus may be a network device, or may be a chip used in the network device. The apparatus has a function of implementing the method according to the first aspect, the method according to the third aspect, the implementation methods of the first aspect, or the implementation methods of the third aspect. The function may be implemented by hardware, or may be implemented by hardware executing corresponding software. The hardware or the software includes one or more modules corresponding to the function.

According to a sixth aspect, an embodiment of this application provides a communication apparatus. The apparatus may be a terminal device, or may be a chip used in the terminal device. The apparatus has a function of implementing the method according to the second aspect, the method according to the fourth aspect, the implementation methods of the second aspect, or the implementation methods of the fourth aspect. The function may be implemented by hardware, or may be implemented by hardware executing corresponding software. The hardware or the software includes one or more modules corresponding to the function.

According to a seventh aspect, an embodiment of this application provides a communication apparatus. The apparatus includes a processor and a memory. The memory is configured to store computer-executable instructions. When the apparatus runs, the processor executes the computer-executable instructions stored in the memory, so that the apparatus performs the method according to any one of the first aspect to the fourth aspect or the implementation methods of the first aspect to the fourth aspect.

According to an eighth aspect, an embodiment of this application provides a communication apparatus. The apparatus includes a processor and an interface circuit. The processor is configured to: communicate with another apparatus through the interface circuit, and perform the method according to any one of the first aspect to the fourth aspect or the implementation methods of the first aspect to the fourth aspect. There are one or more processors.

According to a ninth aspect, an embodiment of this application provides a communication apparatus. The apparatus includes a processor, configured to be connected to a memory, and configured to invoke a program stored in the memory, to perform the method according to any one of the first aspect to the fourth aspect or the implementation methods of the first aspect to the fourth aspect. The memory may be located inside or outside the apparatus. In addition, there are one or more processors.

According to a tenth aspect, an embodiment of this application further provides a computer-readable storage medium. The computer-readable storage medium stores instructions. When the instructions are run on a computer, a processor is enabled to perform the method according to any one of the first aspect to the fourth aspect or the implementation methods of the first aspect to the fourth aspect.

According to an eleventh aspect, an embodiment of this application further provides a computer program product. The computer product includes a computer program. When the computer program is run, the method according to any one of the first aspect to the fourth aspect or the implementation methods of the first aspect to the fourth aspect is performed.

According to a twelfth aspect, an embodiment of this application further provides a chip system. The chip system includes a processor, configured to perform the method according to any one of the first aspect to the fourth aspect or the implementation methods of the first aspect to the fourth aspect.

According to a thirteenth aspect, an embodiment of this application further provides a communication system. The communication system includes a network device configured to perform the method according to any one of the first aspect or the implementation methods of the first aspect, and a terminal device configured to perform the method according to any one of the second aspect or the implementation methods of the second aspect.

According to a fourteenth aspect, an embodiment of this application further provides a communication system. The communication system includes a network device configured to perform the method according to any one of the third aspect or the implementation methods of the third aspect, and a terminal device configured to perform the method according to any one of the fourth aspect or the implementation methods of the fourth aspect.

### BRIEF DESCRIPTION OF DRAWINGS

FIG. 1 is a schematic diagram of a network architecture to which an embodiment of this application is applicable;
FIG. 2 is a schematic diagram of a communication method according to an embodiment of this application;
FIG. 3 is a schematic diagram of a communication method according to an embodiment of this application;
FIG. 4 is a schematic diagram of another communication method according to an embodiment of this application;
FIG. 5 is a schematic diagram of a communication apparatus according to an embodiment of this application;
FIG. 6 is a schematic diagram of another communication apparatus according to an embodiment of this application;
FIG. 7 is a schematic diagram of a terminal device according to an embodiment of this application; and
FIG. 8 is a schematic diagram of a network device according to an embodiment of this application.

### DESCRIPTION OF EMBODIMENTS

Technical solutions provided in embodiments of this application may be applied to various communication systems, for example, a 5th generation (5th generation, 5G) communication system, a future evolved system, or a plurality of converged communication systems. The technical solutions provided in embodiments of this application may be applied to a plurality of application scenarios, for example, machine to machine (machine to machine, M2M) communication, macro-micro communication, enhanced mobile broadband (enhanced mobile broadband, eMBB) communication, ultra-reliable and low-latency communication (ultra-reliable and low-latency communication, URLLC), and massive machine-type communications (massive machine-type communications, mMTC). These scenarios may include but are not limited to a scenario of communication between communication devices, a scenario of communication between network devices, a scenario of communication between a network device and a communication device, and the like. The following provides descriptions by using an example in which the technical solutions are applied to a scenario of communication between a network device and a terminal.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

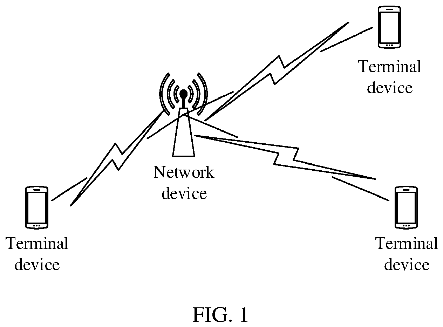

FIG. 1 is a schematic diagram of a network architecture to which an embodiment this application is applicable. The network architecture includes a terminal device and a network device. The terminal device communicates with the network device through a wireless interface.

The terminal device (terminal device) is a device having a wireless transceiver function. The terminal device may be deployed on land, including an indoor device, an outdoor device, a handheld device, or a vehicle-mounted device; or may be deployed on a water surface (for example, on a ship); or may be deployed in the air (for example, on an airplane, a balloon, or a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), user equipment (user equipment, UE), or the like.

The network device is a device that provides a wireless communication function for the terminal device. The network device includes but is not limited to a next generation NodeB (gNodeB, gNB) in 5th generation (5th generation, 5G), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseBand unit, BBU), a transmission reception point (transmission reception point, TRP), a transmission point (transmission point, TP), a mobile switching center, or the like.

When 5G is independently deployed, a logical system of the network device may use a mode in which a centralized unit (centralized unit, CU) and a distributed unit (distributed unit, DU) are separated. Based on a configuration of protocol stack functions, a CU-DU logical system may be classified into two types: a CU-DU separation architecture and a CU-DU converged architecture. For the CU-DU separation architecture, the protocol stack functions may be dynamically configured and split. Some functions are implemented in the CU, and remaining functions are implemented in the DU. To meet requirements of different split options, ideal and non-ideal transmission networks need to be supported. An interface between the CU and the DU need to comply with a 3rd generation partnership project (3rd generation partnership project, 3GPP) specification requirement. For the CU-DU converged architecture, logical functions of the CU and the DU are integrated into a same network device, to implement all functions of a protocol stack.

As a quantity of intelligent terminal users constantly grows, and a user service volume and a data throughput constantly increase, a higher requirement is imposed on a communication rate. To meet requirements for higher downlink and uplink peak rates, a higher transmission bandwidth needs to be provided. Because a high-bandwidth continuous spectrum is scarce, a carrier aggregation (Carrier Aggregation, CA) solution is proposed. Carrier aggregation aggregates two or more component carriers (Component Carriers, CCs) together to support a higher transmission bandwidth.

Carrier aggregation in a single connectivity scenario means that a cell in the network device is configured as a primary cell of the terminal device, and another cell in the network device is configured as a secondary cell of the terminal device. The primary cell (Primary Cell, Pcell) is a cell established when the terminal device initially establishes a connection to the network device, or a cell in which radio resource control (Radio resource control, RRC) connection reestablishment is performed, or a primary cell specified in a handover (handover) process. The primary cell is responsible for RRC communication with the terminal device. A component carrier corresponding to the primary cell is referred to as a primary component carrier (Primary Component Carrier, PCC). A downlink carrier of the primary cell is referred to as a downlink primary component carrier (DL PCC), and an uplink carrier of the primary cell is referred to as an uplink primary component carrier (UL PCC). The secondary cell (Secondary Cell, Scell) is added during RRC reconfiguration, and is used to provide an additional radio resource. There is no RRC communication between the secondary cell and the terminal device. A component carrier corresponding to the secondary cell is referred to as a secondary component carrier (Secondary Component Carrier, PCC). A downlink carrier of the secondary cell is referred to as a downlink secondary component carrier (DL SCC), and an uplink carrier of the secondary cell is referred to as an uplink secondary component carrier (UL SCC).

Carrier aggregation in a dual connectivity scenario means that a cell in a primary network device is configured as a primary cell (namely, a primary cell in a master cell group (Master cell group, MCG)) of the terminal device, a cell in a secondary network device is configured as a primary secondary cell (Primary Secondary Cell, Primary Scell) (namely, a primary cell in a secondary cell group (Secondary cell group, SCG)) of the terminal device, and a cell that is in the primary network device or the secondary network device and that is other than the primary cell and the primary secondary cell is configured as the secondary cell of the terminal device. The primary cell is a cell established when the terminal device initially establishes a connection to the network device, or a cell in which RRC connection reestablishment is performed, or a primary cell specified in a handover (handover) process. The primary cell is responsible for RRC communication with the terminal device. A component carrier corresponding to the primary cell is referred to as a primary component carrier. A downlink carrier of the primary cell is referred to as a downlink primary component carrier (DL PCC), and an uplink carrier of the primary cell is referred to as an uplink primary component carrier (UL PCC). The primary secondary cell is added during RRC reconfiguration, and is used to provide an additional radio resource. There is no RRC communication between the primary secondary cell and the terminal device. A component carrier corresponding to the primary secondary cell is referred to as a secondary component carrier. A downlink carrier of the primary secondary cell is referred to as a downlink secondary component carrier (DL SCC), and an uplink carrier of the primary secondary cell is referred to as an uplink secondary component carrier (UL SCC).

The primary cell is determined during connection establishment, and the secondary cell is added/modified/released by using an RRC connection reconfiguration message after initial access is complete.

A relationship between a cell (cell) and a carrier (carrier) is as follows: The cell has no physical entity, is merely a logical concept, and is a minimum logical unit that provides a complete set of services (such as calling, called, mobile, and internet access services) for users in a mobile communication network. The carrier is a radio signal (an electromagnetic wave) that is transmitted by the network device and that has a specific frequency, bandwidth, and standard, and is a body used to carry information. One cell may have one or more downlink carriers and/or one or more uplink carriers. One cell may include one downlink carrier, one uplink carrier, and one supplementary uplink (supplementary uplink, SUL) carrier. The SUL carrier means that only an uplink resource is used for transmission of a current communication standard.

Currently, when a plurality of cells are configured for one terminal device, how to perform further optimization to reduce communication overheads between the terminal device and the network device is a problem that needs to be resolved.

In embodiments of this application, communication between the terminal device and the network device is optimized in a carrier aggregation scenario from three aspects, to reduce communication overheads between the terminal device and the network device.

According to the first aspect, in a process in which the network device indicates the terminal device to activate the secondary cell, an activation procedure is simplified, and signaling interaction is reduced. In this way, on one hand, the secondary cell is quickly activated. On the other hand, communication overheads between the terminal device and the network device are reduced. The secondary cell includes a downlink carrier, or includes a downlink carrier and an uplink carrier, or includes an uplink carrier. If a cell is activated, all uplink and downlink carriers in the cell are activated. Optionally, a downlink carrier and an uplink carrier in a secondary cell are independently activated.

According to the second aspect, when downlink control information (Downlink control information, DCI) is used to schedule a carrier, one piece of DCI can be used to schedule a plurality of carriers (which may be referred to as carrier joint scheduling or multi-carrier scheduling). Compared with that one piece of DCI can be used to schedule only one carrier (which may be referred to as single-carrier scheduling), DCI scheduling efficiency can be improved in embodiments of this application. When a same quantity of carriers are scheduled, fewer pieces of DCI are required in embodiments of this application, to reduce communication overheads between the terminal device and the network device.

According to the third aspect, a plurality of carriers are grouped to obtain a plurality of carrier groups, and carriers in each carrier group meet some features, to reduce communication overheads between the terminal device and the network device.

It should be noted that, in embodiments of this application, the foregoing three aspects are independent of each other. To be specific, only the solution in the first aspect, the solution in the second aspect, or the solution in the third aspect may be performed, or the solutions in any two aspects are combined for implementation (for example, the quick activation solution in the first aspect and the joint scheduling solution in the second aspect are implemented), or the solutions in the three aspects are combined for implementation.

The following separately describes the solutions in the foregoing three aspects.

The following first describes the solution (namely, quick activation) in the first aspect.

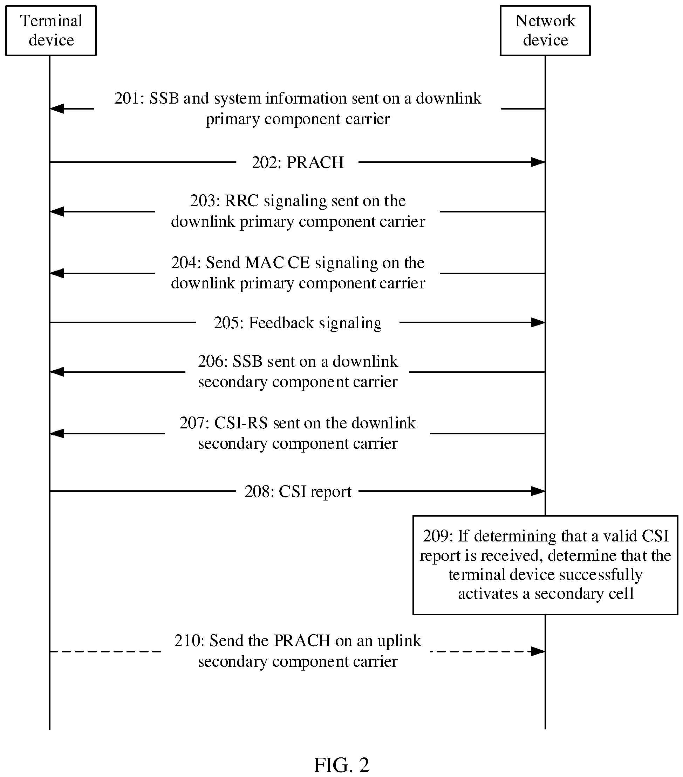

FIG. 2 shows a communication method according to an embodiment of this application. The method is used by a network device to configure a carrier for a terminal device.

The method includes the following steps.

Step 201: The terminal device receives a synchronization signal/broadcast channel block (SS/PBCH Block, SSB) and a system message that are sent by the network device on a downlink primary component carrier.

The terminal device implements downlink synchronization with the downlink primary component carrier based on the SSB. The system message includes information such as a configuration of the primary component carrier.

Step 202: The terminal device sends a physical random access channel (Physical Random Access Channel, PRACH) to the network device, to implement uplink synchronization with an uplink primary component carrier.

The terminal device accesses the primary component carrier through steps 201 and 202.

Step 203: The terminal device receives RRC signaling sent by the network device on the downlink primary component carrier, where the RRC signaling is used to configure configuration information of a secondary cell of the terminal device, and the configuration information of the secondary cell includes information about a downlink secondary component carrier, or includes information about a downlink secondary component carrier and information about an uplink secondary component carrier. One secondary cell includes at least one downlink carrier and K uplink carriers, and K is an integer greater than or equal to 0.

Step 204: The terminal device receives media access control control element (medium access control control element, MAC CE) signaling sent by the network device on the downlink primary component carrier, to activate the secondary cell.

Before the secondary cell is activated, the secondary cell is in an inactive state.

Step 205: The terminal device sends feedback signaling to the network device, to indicate feedback information of the MAC CE signaling.

Step 206: The terminal device receives an SSB sent by the network device on the downlink secondary component carrier, to perform downlink synchronization with the downlink secondary component carrier.

Step 207: The terminal device receives a channel state information reference signal (Channel status information Reference Signal, CSI-RS) sent by the network device on the downlink secondary component carrier.

Step 208: The terminal device measures a channel based on the CSI-RS to obtain a channel state information (Channel status information, CSI) report, and reports the CSI report to the network device.

The CSI report includes but is not limited to one or more of the following information: a channel quality indicator (Channel Quality Indicator, CQI), a precoding matrix indicator PMI, a rank indicator (Rank Indication, RI), latency information, angle information, and beam information.

Step 209: If the network device receives a valid CSI report, the network device determines that the terminal device successfully activates the secondary cell.

Step 210: The terminal device sends the PRACH to the network device on the uplink secondary component carrier.

This step is an optional step.

This embodiment of this application provides the solution for activating the secondary cell through step 201 to step 210.

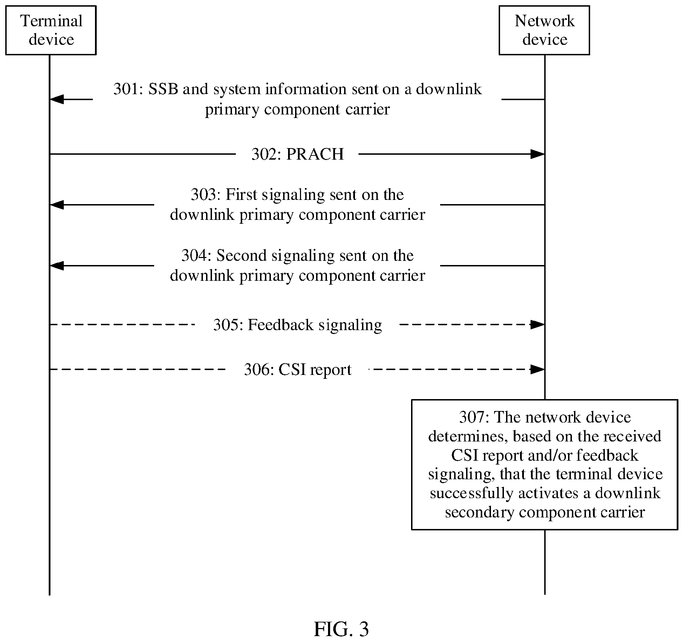

FIG. 3 shows a communication method according to an embodiment of this application. Compared with the embodiment corresponding to FIG. 2, in the method, a secondary cell can be quickly activated, thereby reducing communication overheads between a terminal device and a network device. In other words, the secondary cell activation solution in the embodiment corresponding to FIG. 3 is an improvement on the secondary cell activation solution in the embodiment corresponding to FIG. 2.

The method includes the following steps.

Step 301 and step 302 are the same as step 201 and step 202. Refer to the foregoing descriptions.

Step 303: The terminal device receives first signaling (such as MAC CE signaling, RRC signaling, or DCI signaling) sent by the network device on a downlink primary component carrier, where the first signaling is used to configure a secondary cell of the terminal device, to be specific, the first signaling includes configuration information of the secondary cell.

The configuration information of the secondary cell includes information about a downlink secondary component carrier, or includes information about a downlink secondary component carrier and information about an uplink secondary component carrier.

Step 304: The terminal device receives second signaling (such as MAC CE signaling, RRC signaling, or DCI signaling) sent by the network device on the downlink primary component carrier, where the second signaling is used by the terminal device to activate the secondary cell.

Before the secondary cell is activated, the secondary cell is in an inactive state.

Step 305: The terminal device sends feedback signaling to the network device, to indicate feedback information of the second signaling.

This step is optional.

Step 306: The terminal device sends a CSI report to the network device.

This step is optional.

Only one of step 305 and step 306 may be performed, or both of step 305 and step 306 may be performed.

Step 307: The network device determines, based on the received CSI report and/or feedback signaling, that the terminal device successfully activates the secondary cell.

In an implementation method, time domain synchronization information of the downlink primary component carrier is the same as time domain synchronization information of the downlink secondary component carrier, and/or frequency domain synchronization information of the downlink primary component carrier is the same as frequency domain synchronization information of the downlink secondary component carrier. Alternatively, a difference between time domain synchronization information of the downlink primary component carrier and time domain synchronization information of the downlink secondary component carrier is less than a preset threshold, and/or a difference between frequency domain synchronization information of the downlink primary component carrier and frequency domain synchronization information of the downlink secondary component carrier is less than a preset threshold. In addition, a CSI value of the downlink primary component carrier is the same as a CSI value of the downlink secondary component carrier, or a difference between a CSI value of the downlink primary component carrier and a CSI value of the downlink secondary component carrier is less than a preset threshold.

In another implementation method, time domain synchronization information of the downlink secondary component carrier (which may be referred to as a first downlink secondary component carrier) configured in step 303 is the same as time domain synchronization information of a downlink secondary component carrier (which may be referred to as a second downlink secondary component carrier) in one secondary cell indicated by one network device, and/or frequency domain synchronization information of the first downlink secondary component carrier is the same as frequency domain synchronization information of the second downlink secondary component carrier. Alternatively, a difference between time domain synchronization information of the first downlink secondary component carrier and time domain synchronization information of the second downlink secondary component carrier is less than a preset threshold, and/or a difference between frequency domain synchronization information of the first downlink secondary component carrier and frequency domain synchronization information of the second downlink secondary component carrier is less than a preset threshold. In addition, a CSI value of the first downlink secondary component carrier is the same as a CSI value of the second downlink secondary component carrier, or a difference between a CSI value of the first downlink secondary component carrier and a CSI value of the second downlink secondary component carrier is less than a preset threshold.

Optionally, the second signaling may carry at least one of a cell index, an uplink carrier index, and a downlink carrier index.

Optionally, the network device configures, in a configuration of the secondary cell, an association relationship between different carriers or an association relationship between reference signals on different carriers. The relationship is represented by QCL (Quasi co-location)-X below. For example, if a CSI-RS on the downlink secondary component carrier and a CSI-RS on the downlink primary component carrier meet QCL-X, the CSI value of the downlink primary component carrier is the same as the CSI value of the downlink secondary component carrier, or the difference between the CSI value of the downlink primary component carrier and the CSI value of the downlink secondary component carrier is less than the preset threshold. If an SSB on the downlink secondary component carrier and an SSB on the primary component carrier meet QCL-X, the time domain synchronization information of the downlink primary component carrier is the same as the time domain synchronization information of the downlink secondary component carrier, and/or the frequency domain synchronization information of the downlink primary component carrier is the same as the frequency domain synchronization information of the downlink secondary component carrier. Alternatively, the difference between the time domain synchronization information of the downlink primary component carrier and the time domain synchronization information of the downlink secondary component carrier is less than the preset threshold, and/or the difference between the frequency domain synchronization information of the downlink primary component carrier and the frequency domain synchronization information of the downlink secondary component carrier is less than the preset threshold.

For another example, if the downlink secondary component carrier and the downlink primary component carrier meet the QCL-X relationship, the time domain synchronization information of the downlink primary component carrier is the same as the time domain synchronization information of the downlink secondary component carrier, and/or the frequency domain synchronization information of the downlink primary component carrier is the same as the frequency domain synchronization information of the downlink secondary component carrier. Alternatively, the difference between the time domain synchronization information of the downlink primary component carrier and the time domain synchronization information of the downlink secondary component carrier is less than the preset threshold, and/or the difference between the frequency domain synchronization information of the downlink primary component carrier and the frequency domain synchronization information of the downlink secondary component carrier is less than the preset threshold. In addition, the CSI value of the downlink primary component carrier is the same as the CSI value of the downlink secondary component carrier, or the difference between the CSI value of the downlink primary component carrier and the CSI value of the downlink secondary component carrier is less than the preset threshold.

For still another example, the downlink secondary component carrier and a carrier indicated by one network device meet a QCL-X relationship.

According to the foregoing solution, because the synchronization information of the downlink secondary component carrier is the same as or similar to the synchronization information of the downlink primary component carrier (or the downlink secondary component carrier in one secondary cell indicated by one network device), the terminal device may activate the secondary cell without receiving, from the network device, related information used to perform channel measurement. In other words, the terminal device may perform downlink synchronization with the downlink secondary component carrier based on the synchronization information of the downlink primary component carrier (or the downlink secondary component carrier in one secondary cell indicated by one network device) and the configuration information of the secondary cell. Compared with the secondary cell activation solution in the embodiment corresponding to FIG. 2, steps in which the network device activates the secondary cell for the terminal device can be reduced (where at least step 206 and step 207 in the embodiment corresponding to FIG. 2 are reduced), and time for changing the secondary cell from an inactive state to an active state is extremely shortened. Therefore, communication overheads between the terminal device and the network device are further reduced while the secondary cell is quickly activated.

In an implementation method, an implementation method of step 307 includes but is not limited to the following three methods:
Method 1: If the network device receives the CSI report from the terminal device and the CSI report is a valid CSI report, the network device determines that the terminal device successfully activates the secondary cell.

A definition of the valid CSI report may be that indication information in the CSI report meets a predefined condition. For example, a CQI value is not 0.

According to the implementation method, step 306 needs to be performed, but step 305 may be performed or may not be performed.

When the network device receives the valid CSI report from the terminal device, the network device determines that the terminal device successfully activates the secondary cell. The terminal device performs downlink synchronization with the downlink secondary component carrier based on the downlink primary component carrier or the synchronization information of the downlink secondary component carrier in one secondary cell indicated by one network device.

Method 2: The network device determines, at a first moment, that the terminal device successfully activates the secondary cell, where an interval between the first moment and time at which the feedback signaling is received is greater than or equal to first specified duration.

According to the implementation method, step 305 needs to be performed, but step 306 may be performed or may not be performed.

For example, if the network device receives the feedback signaling at a moment T1, the network device determines, at a moment T2 (also referred to as the first moment), that the terminal device successfully activates the secondary cell. A difference between T2 and T1 is greater than or equal to the first specified duration. Alternatively, it is understood as that after at least the first specified duration after a moment at which the feedback signaling is received is reached, the network device determines that the terminal device successfully activates the secondary cell.

Optionally, the first specified duration is equal to (a quantity of slots in one subframe that correspond to a subcarrier spacing + 1) ^{∗} duration of one slot, the subcarrier spacing is a subcarrier spacing corresponding to a physical uplink control channel (Physical Uplink Shared CHannel, PUCCH), and the PUCCH is used to carry the feedback information of the second signaling.

Optionally, the first specified duration is associated with a subcarrier spacing of a first active bandwidth part of the downlink secondary component carrier. For example, the first specified duration corresponding to 15 kHz is 5 ms, and the first specified duration corresponding to 30 kHz is 4 ms. The first active bandwidth part is configured by a higher layer.

Method 3: If the network device receives a valid CSI report at a second moment, the network device determines that the terminal device successfully activates the secondary cell, where an interval between the second moment and time at which the feedback signaling is received is greater than or equal to second specified duration.

According to the implementation method, both step 305 and step 306 need to be performed.

For example, if the network device receives the feedback signaling at a moment T3, and receives the valid CSI report at a moment T4 (also referred to as the second moment), and a difference between T4 and T3 is greater than or equal to the second specified duration, the network device determines that the terminal device successfully activates the secondary cell. Alternatively, it is understood as that after at least the second specified duration after a moment at which the feedback signaling is received is reached, if the network device receives the valid CSI report, the network device determines that the terminal device successfully activates the secondary cell.

Optionally, the second specified duration is equal to (a quantity of slots in one subframe that correspond to a subcarrier spacing + 1) ^{∗} duration of one slot, the subcarrier spacing is a subcarrier spacing corresponding to a PUCCH, and the PUCCH is used to carry the feedback information of the second signaling.

Optionally, the second specified duration is associated with a subcarrier spacing of a first active bandwidth part of the downlink secondary component carrier. For example, the first specified duration corresponding to 15 kHz is 5 ms, and the first specified duration corresponding to 30 kHz is 4 ms. The first active bandwidth part is configured by a higher layer.

The following describes the solution (namely, carrier joint scheduling or multi-carrier scheduling) in the second aspect.

In the first implementation method, one piece of DCI is used to schedule one or more data channels (for example, a PDSCH or a PUSCH), one data channel carries one transport block (Transport Block, TB), and one data channel is mapped to one carrier. Therefore, one piece of DCI is used to schedule only one carrier. Alternatively, it is understood as that the DCI in the implementation method is used only for single-carrier scheduling.

In the second implementation method, in this embodiment of this application, joint scheduling and transmission may be further performed between active downlink carriers. Specifically, one piece of DCI can be used to schedule M data channels (for example, a physical downlink shared channel (Physical Downlink Shared Channel, PDSCH) or a physical uplink shared channel (Physical Uplink Shared Channel, PUSCH)), the M data channels are mapped to N carriers, M is a positive integer, and N is an integer greater than 1. Therefore, according to the implementation method, one piece of DCI can be used to schedule a plurality of carriers. Alternatively, it is understood as that the DCI in the implementation method may be used for multi-carrier scheduling or carrier joint scheduling.

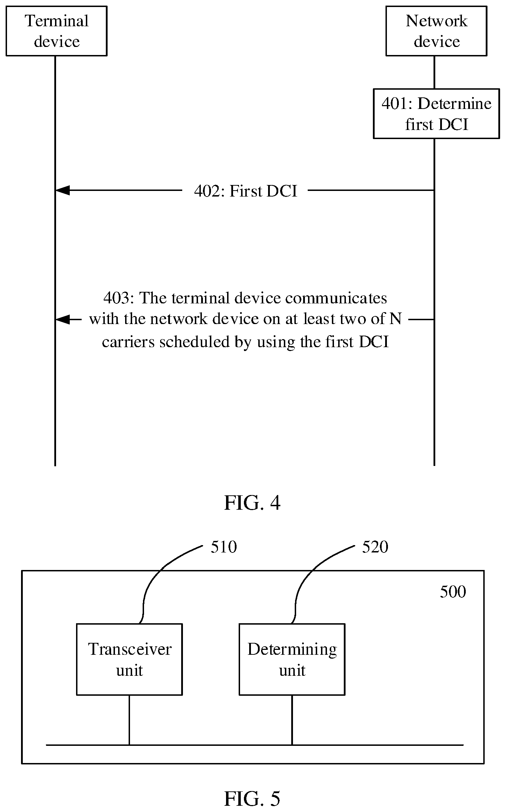

FIG. 4 shows another communication method according to an embodiment of this application. According to the method, one piece of DCI can be used to schedule a plurality of carriers. In the embodiment corresponding to FIG. 4, the one piece of DCI can be used to schedule a plurality of carriers, or the DCI is used for multi-carrier scheduling, or the DCI is used for carrier joint scheduling.

The method includes the following steps.

Step 401: A network device determines first DCI.

The first DCI is used to schedule M data channels, the M data channels are mapped to N carriers, one of the M data channels is mapped to at least one carrier of the N carriers, M is a positive integer, and N is an integer greater than 1.

That the M data channels are mapped to N carriers may also be understood as that the N carriers are used for data transmission on the M data channels.

A meaning of "mapping" is that there is a correspondence between the M data channels and the N carriers. When there is data that needs to be sent on the M data channels or a part of data channels of the M data channels, the data is sent by using the corresponding N carriers or a part of carriers of the N carriers. To be specific, information on the M data channels may be carried on physical resource blocks on the N carriers.

Step 402: The network device sends the first DCI to a terminal device. Correspondingly, the terminal device may receive the first DCI.

Step 403: The terminal device communicates, based on the first DCI, with the network device on at least two of the N carriers scheduled by using the first DCI.

According to the foregoing solution, because one piece of DCI can be used to schedule a plurality of carriers, compared with that one piece of DCI is used to schedule only one carrier, when a same quantity of carriers need to be scheduled, fewer pieces of DCI are required in the foregoing method in this application, so that signaling overheads between the terminal device and the network device can be reduced. In other words, compared with a single-carrier scheduling solution, a multi-carrier scheduling solution in this application can reduce signaling overheads between the terminal device and the network device.

In an implementation method, in this embodiment of this application, a carrier used to send the DCI for scheduling the plurality of carriers may be predefined, or configured by using MAC CE signaling, RRC signaling, or DCI signaling, or the terminal device determines, by blindly detecting and receiving the DCI for carrier joint scheduling, a downlink carrier for sending the DCI.

In an implementation method, in this embodiment of this application, a maximum quantity of carriers scheduled by using one piece of DCI may be predefined, or may be configured by using MAC CE signaling, RRC signaling, or DCI signaling. For example, the maximum quantity of carriers scheduled by using one piece of DCI is predefined as two, three, or the like. For another example, the maximum quantity of carriers scheduled by using one piece of DCI is semi-statically configured as two, three, or the like by using the RRC signaling. The carrier includes an uplink carrier or a downlink carrier.

In an implementation method, in this embodiment of this application, an actual quantity of carriers scheduled by using one piece of DCI may be predefined, or may be configured by using MAC CE signaling, RRC signaling, or DCI signaling. For example, it is predefined that the actual quantity of carriers scheduled by using one piece of DCI is the same as the maximum quantity of carriers scheduled by using the DCI. For another example, the actual quantity of carriers scheduled by using one piece of DCI is semi-statically configured as two, three, or the like by using the RRC signaling. The carrier includes an uplink carrier or a downlink carrier.

For a scheduling mode of the foregoing DCI (for example, the first DCI described above), the DCI is designed as follows in this embodiment of this application.

### 1. Indication method for the scheduling mode of the DCI

DCI that is used for single-carrier scheduling and that has a same size but different formats may be distinguished by using a DCI format identifier (identifier for DCI formats) field. To be specific, DCI in different formats is indicated by adding different information to the DCI format identifier field, but sizes of these pieces of DCI are the same. For example, the DCI format may include, for example, a DCI format 1_1.

For the foregoing DCI used for multi-carrier scheduling in this embodiment of this application, to indicate that the DCI is used for multi-carrier scheduling, the following two different methods may be used for implementation.

Implementation method 1: In this embodiment of this application, a size of the DCI (which may also be referred to as the DCI for multi-carrier scheduling, or referred to as the first DCI) used for scheduling the plurality of carriers is the same as a size of DCI (which may also be referred to as DCI for single-carrier scheduling, or referred to as second DCI) used for single-carrier scheduling.

For example, a single-carrier scheduling process is as follows: The network device may further determine second DCI, where the second DCI is used to schedule K data channels, the K data channels are mapped to one carrier, the one carrier is used for data transmission on the K data channels, and K is a positive integer. The network device sends the second DCI to the terminal device.

In Implementation method 1, because the DCI used for multi-carrier scheduling and the DCI used for single-carrier scheduling have a same DCI size, to distinguish between the DCI used for multi-carrier scheduling and the DCI used for single-carrier scheduling in this embodiment of this application, the following provides three different design solutions:
(1) Scrambling is performed by using different scrambling identifiers.
   For example, the DCI used for single-carrier scheduling is scrambled by using a cell radio network temporary identifier (Cell Radio Network Temporary Identifier, C-RNTI), and the DCI used for multi-carrier scheduling is scrambled by using a new RNTI. Therefore, the terminal device may distinguish between single-carrier scheduling and multi-carrier scheduling by using different RNTIs for scrambling.
(2) Additional 1-bit information is used to distinguish whether the DCI is used for single-carrier scheduling or multi-carrier scheduling.
   For example, a first identifier field or a multi-carrier identifier (identifier for multiple carriers) field is introduced into the DCI, where a value 0 of the first identifier field or the multi-carrier identifier indicates single-carrier scheduling, and a value 1 of the first identifier field or the multi-carrier identifier indicates multi-carrier scheduling; or a value 1 indicates single-carrier scheduling, and a value 0 indicates multi-carrier scheduling.
(3) The scheduling mode of the DCI is configured by using the RRC signaling.
   For example, the network device sends the RRC signaling to the terminal device, to indicate that the first DCI is used for scheduling the N carriers, where N is an integer greater than 1. Alternatively, it is understood as that the RRC signaling is used to indicate that the first DCI is used for multi-carrier scheduling.

For another example, the network device sends the RRC signaling to the terminal device, to indicate that the second DCI is used for scheduling one carrier. Alternatively, it is understood as that the RRC signaling is used to indicate that the second DCI is used for single-carrier scheduling.

For still another example, the terminal device defines a multi-carrier joint scheduling capability, and the terminal device reports the capability. If the terminal device supports the multi-carrier joint scheduling capability, the network device may configure, by using higher layer signaling, whether the multi-carrier capability of the terminal device is enabled. If the capability is configured to be enabled, the second DCI is used for multi-carrier scheduling. Otherwise, if the capability is configured to be disabled or not configured, the second DCI is used for single-carrier scheduling.

Implementation method 2: In this embodiment of this application, if a size of the DCI (namely, the first DCI) used for multi-carrier scheduling is different from a size of DCI (namely, second DCI) used for single-carrier scheduling, a DCI format identifier (identifier for DCI formats) field may not be required in a new DCI format. In other words, whether the scheduling mode of the DCI is multi-carrier scheduling or single-carrier scheduling may be directly distinguished by using the size of the DCI.

### 2. Design for a carrier indicator (carrier indicator) field in the DCI

In this embodiment of this application, a method for designing the carrier indicator field in the DCI (namely, the first DCI) used for multi-carrier scheduling includes but is not limited to the following content:

An example in which one piece of DCI is used to schedule N carriers is used for description.

(1) The DCI does not include the carrier indicator field.

For example, the N carriers scheduled in the DCI include a scheduled carrier, and other N-1 carriers are configured for the terminal device by using the RRC signaling. Alternatively, it is understood as that the N carriers scheduled by using the DCI include a carrier used to send the DCI and other N-1 carriers, and the N-1 carriers are configured for the terminal device by using the RRC signaling. A scheduling sequence (for scheduling frequency domain resources) of the N carriers in frequency domain may be sorted clockwise or counterclockwise based on cell indexes. Alternatively, the carrier for sending the DCI is at the beginning or end of a scheduling sequence, and other carriers are sorted clockwise or counterclockwise based on cell indexes. Alternatively, the carrier for sending the DCI is at the beginning or end of a scheduling sequence, and other carriers are sorted according to a sequence configured by using the RRC signaling.

For another example, all the N carriers scheduled by using the DCI are configured in the RRC signaling. In this case, a scheduling sequence of the N carriers in frequency domain may be sorted clockwise or counterclockwise based on cell indexes, or sorted according to a sequence configured by using the RRC signaling.

(2) The DCI includes N-1 carrier indicator fields, the N carriers scheduled by using the DCI include the carrier used to send the DCI and other N-1 carriers, and the other N-1 carriers are indicated by using the N-1 carrier indicator fields.

Alternatively, it is understood as that N-1 carrier indicator fields in the DCI indicate N-1 carriers of the N carriers scheduled by using the DCI, each carrier indicator field indicates one carrier, and another carrier in the N carriers scheduled by using the DCI is the carrier for sending the DCI. A scheduling sequence (for scheduling frequency domain resources) of the N carriers in frequency domain may be sorted clockwise or counterclockwise based on cell indexes. Alternatively, the carrier for sending the DCI is at the beginning or end of a scheduling sequence, and other carriers are sorted clockwise or counterclockwise based on cell indexes. Alternatively, the carrier for sending the DCI is at the beginning or end of a scheduling sequence, and other carriers are sorted according to a sequence configured by using the DCI signaling.

(3) The DCI includes one carrier indicator field, the carrier indicator field is used to indicate an index of one carrier group instead of indicating one carrier, the carrier group is configured by using the RRC signaling, and the carrier group includes the N carriers.

In other words, the carrier group including the N carriers is indicated by using the carrier indicator field in the DCI, to indicate the N carriers. In this case, a scheduling sequence of the N carriers in frequency domain may be sorted clockwise or counterclockwise based on cell indexes, or sorted according to a sequence configured by using the RRC signaling.

Optionally, for uplink data channel scheduling, the N carriers cannot be carriers for sending the DCI. Therefore, all the N carriers need to be explicitly indicated.

### 3. Design for a bandwidth part indicator (Bandwidth part indicator) field in the DCI

In this embodiment of this application, a method for designing the BWP indicator field in the DCI (namely, the first DCI) used for multi-carrier scheduling includes but is not limited to the following content:
(1) The DCI includes one BWP indicator field, and scheduled BWP indexes on all scheduled carriers are the same. In other words, active BWP indexes on the N carriers scheduled by using the one piece of DCI are the same.

In an implementation method, quantities of BWPs configured on the N carriers scheduled by using the one piece of DCI are the same.

In another implementation method, BWPs configured on the N carriers scheduled by using the one piece of DCI are completely the same. In other words, not only quantities of BWPs configured on all carriers are the same, but also other configurations (such as BWP sizes or subcarrier spacings) are the same.

In an implementation method, a size of a BWP indicator field in one piece of DCI is determined based on a minimum quantity of BWPs configured on the N scheduled carriers.

For example, two downlink PDSCHs are scheduled by using the first DCI, and are mapped to two downlink carriers C1 and C2. A downlink BWP 1 and a downlink BWP 2 are configured on C1, and a downlink BWP 1 and a downlink BWP 2 are configured on C2. The DCI indicates a BWP index 2. In this case, downlink BWPs activated on C1 and C2 are both BWPs 2, the first PDSCH is mapped to the BWP 2 on C1, and the second PDSCH is mapped to the BWP 2 on C2. For another example, one downlink PDSCH is scheduled by using the first DCI, and is mapped to two downlink carriers C3 and C4. A downlink BWP 1 and a downlink BWP 2 are configured on C3, and a downlink BWP 1 and a downlink BWP 2 are configured on C4. The DCI indicates a BWP index 1. In this case, downlink BWPs activated on C3 and C4 are both BWPs 1, and the PDSCH is mapped to the BWP 1 on C3 and the BWP 1 on C4.

(2) The DCI includes one BWP group indicator field, and the BWP group indicator field is used to indicate an index of one BWP group instead of indicating an index of one BWP.

The BWP group may be configured by using the RRC signaling. The BWP group includes at least one BWP on each scheduled carrier, and a quantity of BWPs in one carrier is less than or equal to a maximum quantity of active BWPs.

For example, the first DCI schedules two downlink PDSCHs, and is mapped to two downlink carriers C1 and C2. A downlink BWP 1 and a downlink BWP 2 are configured on C1, and a downlink BWP 1 and a downlink BWP 2 are configured on C2. The network device configures a BWP group 0{C1 BWP 1, C2 BWP 1}, a BWP group 1 {C1 BWP 1, C2 BWP 2}, and a BWP group 2{C1 BWP 2, C2 BWP 1} by using the RRC signaling. The DCI indicates a BWP group index 0. In this case, downlink BWPs activated on C1 and C2 are both BWPs 1, the first PDSCH is mapped to the BWP 1 on C1, and the second PDSCH is mapped to the BWP 1 on C2.

(3) The DCI includes N BWP indicator fields, and each BWP indicator field is used to indicate one BWP on one carrier.

(4) The DCI does not include a BWP indicator field. The terminal device considers that a PDSCH is mapped to a currently active BWP. That is, the DCI does not support dynamic BWP handover. The network device may perform BWP handover by using existing single-carrier scheduling signaling or RRC signaling.

(5) The DCI includes one BWP indicator field, the one BWP indicator field is used to indicate an active BWP on a primary component carrier or a secondary component carrier, and the current active BWP is used on another carrier. The method is applicable to joint scheduling of a maximum of two carriers.

Optionally, if the terminal device supports simultaneous activation of a plurality of BWPs on one carrier, in the foregoing indication method, a plurality of active BWPs on each carrier need to be separately indicated.

It should be noted that the foregoing indication method for the scheduling mode of the DCI, the design for the carrier indicator field in the DCI, and the design for the bandwidth part indicator field in the DCI may be designed independently of each other. Certainly, during actual application, after the indication method for the scheduling mode of the DCI is selected, when the design method for the carrier indicator field in the DCI and the design method for the bandwidth part indicator field in the DCI are selected, compatibility with the indication method for the scheduling mode of the DCI also needs to be considered. Alternatively, after the design method for the carrier indicator field in the DCI is selected, when the indication method for the scheduling mode of the DCI and the design method for the bandwidth part indicator field in the DCI are selected, compatibility with the design method for the carrier indicator field in the DCI also needs to be considered. In other words, the foregoing three aspects of the DCI design need to be jointly implemented, and need to match each other.

The following describes the solution (that is, setting a carrier group) in the third aspect.

To reduce communication overheads between the terminal device and the network device, and improve communication quality and efficiency, an embodiment of this application provides a carrier group setting method.

In this embodiment of this application, the network device defines one frequency band group, one cell group, or one carrier group.

One frequency band group includes one or more frequency bands, one frequency band includes one or more cells, and one cell includes one or more carriers. The carrier herein includes an uplink carrier and/or a downlink carrier.

One cell group includes one or more cells, and one cell includes one or more carriers. The carrier herein includes an uplink carrier and/or a downlink carrier.

One carrier group includes one or more carriers. The carrier herein includes an uplink carrier and/or a downlink carrier.

The following provides descriptions with reference to an example. For example, a cell 1 and a cell 2 are configured on a frequency band 1, the cell 1 includes one uplink carrier (UL CA-1) and one downlink carrier (DL CA-1), and the cell 2 includes two uplink carriers (UL CA-2 and UL CA-3) and one downlink carrier (DL CA-2); and a cell 3 is configured on a frequency band 2, and the cell 3 includes one uplink carrier (UL CA-4) and one downlink carrier (DL CA-3).

If the network device defines a frequency band group {frequency band 1, frequency band 2}, carriers corresponding to the frequency band group include UL CA-1, UL CA-2, UL CA-3, UL CA-4, DL CA-1, DL CA-2, and DL CA-3.

If the network device defines a cell group {cell 1, cell 2}, carriers corresponding to the cell group include UL CA-1, UL CA-2, UL CA-3, DL CA-1, and DL CA-2.

If the network device defines a carrier group {UL CA-1, UL-CA4, DL-CA1, DL-CA3}, carriers in the carrier group include UL CA-1, UL-CA4, DL-CA1, and DL-CA3.

Optionally, the network device may alternatively define one uplink carrier group and one downlink carrier group. For example, if the network device defines an uplink carrier group {UL CA-1, UL CA-2, UL-CA3, UL-CA4}, carriers in the carrier group include UL CA-1, UL CA-2, UL-CA3, and UL-CA4. For another example, if the network device defines a downlink carrier group {DL-CA1, DL-CA2, DL-CA3}, carriers in the carrier group include DL-CA1, DL-CA2, and DL-CA3.

Therefore, the network device may specify a group of carriers by defining a frequency band group, a cell group, or a carrier group.

In the following embodiment of this application, an example in which a carrier group is defined is used for description, and the carrier group may include an uplink carrier and a downlink carrier. In this embodiment of this application, carriers in one carrier group need to meet a specific relationship. For example, uplink carriers in the carrier group meet a specific relationship. For another example, downlink carriers in the carrier group meet a specific relationship.

In an implementation method, the relationship that the uplink carriers in the carrier group meet includes but is not limited to one or more of the following relationships:
A1: Timing advances between the uplink carriers in the carrier group are the same, or a difference between timing advances between different uplink carriers is less than a threshold, where the threshold is a predefined value. Therefore, the timing advances between the uplink carriers in the carrier group may be mutually used.
A2: The terminal device sends a PRACH only on an uplink primary component carrier; or sends a PRACH only on one predefined uplink carrier; or sends a PRACH only on one uplink carrier in the carrier group configured by using RRC signaling, and receives a random access response on a downlink carrier corresponding to the uplink carrier.
A3: The terminal device sends a physical uplink control channel (Physical Uplink Shared CHannel, PUCCH) only on an uplink primary component carrier, or sends a PUCCH only on one predefined uplink carrier, or sends a PUCCH only on one uplink carrier in the carrier group configured by using RRC signaling.
A4: The terminal device sends a sounding reference symbol (Sounding Reference Signal, SRS) only on a specific determined uplink carrier, where the uplink carrier may be one predefined uplink carrier or one uplink carrier in the carrier group configured by using RRC signaling.
A5: The terminal device sends a phase tracking reference signal (Phase Tracking Reference Signal, PTRS) only on a specific determined uplink carrier, where the uplink carrier may be one predefined uplink carrier or one uplink carrier in the carrier group configured by using RRC signaling.
A6: Joint scheduling and transmission may be performed between active uplink carriers in the carrier group. To be specific, for an uplink carrier, one piece of downlink control information (Downlink control information, DCI) is supported to be used to schedule uplink carrier bandwidth parts (Carrier bandwidth parts, BWPs) on a plurality of uplink carriers.
A7: All uplink primary component carriers of the terminal devices are the same.

An advantage of meeting A1 or A2 is that the network device may configure a PRACH resource on only one carrier in one carrier group, where the carrier is predefined as a primary component carrier, or a carrier with a maximum/minimum carrier index, or one carrier configured by using higher layer signaling, so that uplink resources are saved. Optionally, when one carrier of one terminal device requires uplink timing advance adjustment, if there is no PRACH resource on the carrier and the carrier is configured in one carrier group, the terminal device needs to report only one timing adjustment request, and the network device may trigger PRACH sending by using DCI on a carrier having a PRACH resource.

An advantage of meeting A3, A4, or A5 is that uplink resources can be saved.

An advantage of meeting A6 is that downlink control resources can be saved.

In an implementation method, the relationship that the downlink carriers in the carrier group meet includes but is not limited to one or more of the following relationships:
B1: Time domain synchronization information of different downlink carriers is the same, or a difference between time domain synchronization information of different downlink carriers is less than a threshold, where the threshold is a predefined value, indicating that time domain synchronization information of the downlink carriers in the carrier group may be mutually used.
B2: Frequency domain synchronization information of different downlink carriers is the same, or a difference between frequency domain synchronization information of different downlink carriers is less than a threshold, where the threshold is a predefined value, indicating that frequency domain synchronization information of the downlink carriers in the carrier group may be mutually used.
B3: Measurement values of different downlink carriers are the same, or a difference between measurement values of different downlink carriers is less than a threshold, where the threshold is a predefined value, and the measurement value includes reference signal received power (reference signal received power, RSRP), reference signal received quality (reference signal received quality, RSRQ), a path loss (path loss), a coupling loss (coupling loss), and the like.
B4: CSI values of different downlink carriers are the same, or a difference between CSI values of different downlink carriers is less than a threshold, where the threshold is a predefined value, and CSI includes but is not limited to one or more of the following: a CQI, a PMI, an RI, latency information, angle information, beam information, and the like.
B5: Joint scheduling and transmission may be performed between active downlink carriers in the carrier group. To be specific, for a downlink carrier, one piece of downlink control information (DCI) is supported to be used to schedule downlink carrier bandwidth parts (BWPs) on a plurality of downlink carriers.
B6: The network device sends an SSB on only one downlink carrier, where the carrier is predefined as a primary component carrier, or a carrier with a maximum/minimum carrier index in the carrier group, or one carrier configured by using higher layer signaling.
B7: The network device sends a CSI-RS only on a specific determined downlink carrier, where the downlink carrier may be a downlink primary component carrier or a downlink secondary component carrier, and the downlink carrier may be configured by using higher layer signaling or predefined.
B8: The network device sends a PDCCH only on a downlink primary component carrier, and the terminal device monitors the PDCCH only on the downlink primary component carrier.
B9: The network device sends a phase tracking reference signal only on a specific determined downlink carrier, where the downlink carrier may be a downlink primary component carrier or a downlink secondary component carrier, and the downlink carrier may be configured by using higher layer signaling or predefined.
B10: The network device sends DCI for cross-carrier scheduling or DCI for joint scheduling only on a specific determined downlink carrier, where the downlink carrier may be a downlink primary component carrier or a downlink secondary component carrier, and the downlink carrier may be configured by using higher layer signaling or predefined.

An advantage of meeting B1, B2, B3, or B4 is that quick activation performed by the terminal device can be implemented, and reference signal resources for time-frequency synchronization can be saved.

An advantage of meeting B5 is that downlink control resources can be saved.

An advantage of meeting B6 or B7 is that resources of the network device can be saved.

An advantage of meeting B8 or B10 is that control channel resources can be saved.

An advantage of meeting B9 is that downlink resources can be saved.

In an implementation method, in this embodiment of this application, a maximum quantity of carriers in the carrier group may be predefined, or may be determined based on a capability reported by the terminal device. Optionally, the terminal device may further report capabilities of different maximum quantities of carriers in different frequency bands to the network device.

In an implementation method, in this embodiment of this application, the network device may not configure the carrier group, and the network device configures one or more associated carriers for each carrier. A specific association relationship includes association of a reference signal and association of a parameter. For example, a CSI-RS of a carrier 1 is associated with a CSI-RS of a carrier 2, CSI of the carrier 1 is associated with CSI of the carrier 2, and an associated carrier parameter indicates that the CSI of the carrier 1 and the CSI of the carrier 2 may be mutually used. This is the same as a feature of the foregoing carrier group. The parameter and the reference signal are also another configuration mode of the foregoing carrier group. For example, the network device configures, in a configuration of the secondary cell, an association relationship between different carriers, an association relationship between reference signals on different carriers, or an association relationship between one or more parameters on different carriers. The relationship is represented by QCL (Quasi co-location)-X below. For example, if the CSI-RS on the downlink carrier 1 and the CSI-RS on the downlink carrier 2 meet QCL-X, B3 and/or B4 are/is met. If an SSB on a downlink secondary component carrier 1 and an SSB on a downlink carrier 2 meet QCL-X, B1 and/or B2 are/is met.

The following provides implementations of combining the carrier group configuration solution in the third aspect with the quick activation solution in the first aspect.

In an implementation method, if the downlink primary component carrier and the downlink secondary component carrier come from a same carrier group, and different downlink carriers in the carrier group meet the foregoing relationship B1 and/or B2, to be specific, time domain synchronization information and/or frequency domain synchronization information of different downlink carriers are/is the same, or a difference between time domain synchronization information and/or frequency domain synchronization information of different downlink carriers is less than a threshold, the terminal device may use time domain synchronization information and/or frequency domain synchronization information of the downlink primary component carrier as time domain synchronization information and/or frequency domain synchronization information of the downlink secondary component carrier, so that in a process of activating the downlink secondary component carrier, step 206 in the embodiment corresponding to FIG. 2 does not need to be performed, thereby reducing communication overheads between the terminal device and the network device.

In another implementation method, if the downlink primary component carrier and the downlink secondary component carrier come from a same carrier group, and different downlink carriers in the carrier group meet the foregoing relationship B3 and/or B4, to be specific, CSI values of different downlink carriers are the same, or a difference between CSI values of different downlink carriers is less than a threshold, the terminal device may use the CSI value of the downlink primary component carrier, so that step 207 in the embodiment corresponding to FIG. 2 does not need to be performed, and the terminal device does not need to perform channel measurement either, thereby reducing communication overheads between the terminal device and the network device.

In still another implementation method, if the downlink primary component carrier and the downlink secondary component carrier come from the same carrier group, and different downlink carriers in the carrier group meet the foregoing relationship B1 and/or B2, and meet the foregoing relationship B3 and/or B4, the solution in the embodiment corresponding to FIG. 3 may be obtained.

The following provides an implementation of combining the carrier group configuration solution in the third aspect with the carrier joint scheduling solution in the second aspect.

In an implementation method, in this embodiment of this application, a carrier for sending a PDCCH of N carriers scheduled by using one piece of DCI may be predefined, or may be configured by using MAC CE signaling, RRC signaling, or DCI signaling. The N carriers may come from a same carrier group, and carriers in the carrier group meet conditions of B5 and/or B6.

It should be noted that, in this embodiment of this application, the carrier group configuration solution in the third aspect may alternatively be combined with the quick activation solution in the first aspect and the carrier joint scheduling solution in the second aspect.

For example, one carrier group may be predefined, and carriers in the carrier group simultaneously meet at least the following (1) to (3):
(1) B1 and/or B2 defined above;
(2) B3 and/or B4 defined above; and
(3) B5 and/or B6 defined above.

In this combined solution, on one hand, quick carrier activation can be implemented, and on the other hand, carrier joint scheduling can be implemented, thereby reducing communication overheads between the terminal device and the network device in different phases, and greatly improving efficiency of communication between the terminal device and the network device.

The solutions provided in this application are described above mainly from a perspective of interaction between network elements. It may be understood that, to implement the foregoing functions, the network elements include corresponding hardware structures and/or software modules for performing the foregoing functions. A person of ordinary skill in the art should easily be aware that, in combination with the examples described in embodiments disclosed in this specification, units and algorithm steps may be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

It may be understood that, in the foregoing method embodiments, corresponding steps or operations implemented by the terminal device may alternatively be implemented by a component (for example, a chip or a circuit) used in the terminal device. Corresponding steps or operations implemented by the network device may alternatively be implemented by a component (for example, a chip or a circuit) used in the network device.

Embodiments of this application further provide an apparatus configured to implement any one of the foregoing methods. For example, an apparatus is provided, and includes units (or means) configured to implement the steps performed by the terminal device in any one of the foregoing methods. For example, an apparatus is provided, and includes units (or means) configured to implement the steps performed by the network device in any one of the foregoing methods.

FIG. 5 is a schematic diagram of a communication apparatus according to an embodiment of this application. The apparatus is configured to implement the steps performed by the corresponding network device in the method embodiment in FIG. 3 or FIG. 4. As shown in FIG. 5, the apparatus 500 includes a transceiver unit 510 and a determining unit 520.

In a first embodiment:
The transceiver unit 510 is configured to: send first signaling to a terminal device on a downlink primary component carrier, where the first signaling includes configuration information of a secondary cell, and the configuration information of the secondary cell includes information about a downlink secondary component carrier, or includes information about a downlink secondary component carrier and information about an uplink secondary component carrier; and send second signaling to the terminal device, where the second signaling is used by the terminal device to activate the secondary cell. The determining unit 520 is configured to determine, based on a channel state information CSI report and/or feedback signaling received from the terminal device, that the terminal device successfully activates the secondary cell, where the feedback signaling is used to indicate feedback information of the second signaling; time-frequency domain synchronization information of the downlink primary component carrier is the same as time-frequency domain synchronization information of the downlink secondary component carrier, or a difference between time-frequency domain synchronization information of the downlink primary component carrier and time-frequency domain synchronization information of the downlink secondary component carrier is less than a first threshold; and a CSI value of the downlink primary component carrier is the same as a CSI value of the downlink secondary component carrier, or a difference between a CSI value of the downlink primary component carrier and a CSI value of the downlink secondary component carrier is less than a second threshold.

In a possible implementation method, the determining unit 520 is specifically configured to: if the transceiver unit 510 receives the CSI report from the terminal device, and the CSI report is a valid CSI report, determine that the terminal device successfully activates the secondary cell; determine, at a first moment, that the terminal device successfully activates the secondary cell, where an interval between the first moment and time at which the feedback signaling is received is greater than or equal to first specified duration; or if the transceiver unit 510 receives the CSI report at a second moment, and the CSI report is a valid CSI report, determine that the terminal device successfully activates the secondary cell, where an interval between the second moment and time at which the feedback signaling is received is greater than or equal to second specified duration.

In a possible implementation method, the first specified duration is equal to (a quantity of slots in one subframe that correspond to a subcarrier spacing + 1) ^{∗} duration of one slot, the subcarrier spacing is a subcarrier spacing corresponding to a PUCCH, and the PUCCH is used to carry the feedback information of the second signaling.

In a possible implementation method, the second specified duration is equal to (a quantity of slots in one subframe that correspond to a subcarrier spacing + 1) ^{∗} duration of one slot, the subcarrier spacing is a subcarrier spacing corresponding to a PUCCH, and the PUCCH is used to carry the feedback information of the second signaling.

In a possible implementation method, the first signaling is media access control control element MAC CE signaling, radio resource control RRC signaling, or downlink control information DCI signaling.

In a possible implementation method, the second signaling is MAC CE signaling, radio resource control RRC signaling, or downlink control information DCI signaling.

In a second embodiment:
The determining unit 520 is configured to determine first downlink control information DCI, where the first DCI is used to schedule M data channels, the M data channels are mapped to N carriers, the N carriers are used for data transmission on the M data channels, one of the M data channels is mapped to at least one carrier of the N carriers, M is a positive integer, and N is an integer greater than 1. The transceiver unit 510 is configured to send the first DCI to a terminal device.

In a possible implementation method, the determining unit 520 is further configured to determine second DCI, where the second DCI is used to schedule K data channels, the K data channels are mapped to one carrier, the one carrier is used for data transmission on the K data channels, and K is a positive integer. The transceiver unit 510 is further configured to send the second DCI to the terminal device, where a scrambling identifier corresponding to the first DCI is different from a scrambling identifier corresponding to the second DCI.

In a possible implementation method, the first DCI includes a first identifier field, and the first identifier field is used to indicate that the first DCI is used for scheduling the N carriers.

In a possible implementation method, the transceiver unit 510 is further configured to send radio resource control RRC signaling to the terminal device, where the RRC signaling is used to indicate that the first DCI is used for scheduling the N carriers.

In a possible implementation method, the N carriers include a carrier used to send the first DCI and other N-1 carriers, and the other N-1 carriers are configured by using the RRC signaling; the N carriers are configured by using the RRC signaling; the first DCI includes N-1 carrier indicator fields, the N carriers include a carrier used to send the first DCI and other N-1 carriers, and the N-1 carrier indicator fields are used to indicate the other N-1 carriers; or the first DCI includes one carrier indicator field, the carrier indicator field is used to indicate an index of one carrier group, the carrier group includes the N carriers, and the carrier group is configured by using the RRC signaling.

In a possible implementation method, the first DCI includes one BWP indicator field, and the BWP indicator field is used to indicate N BWPs that are on the N carriers and that have a same index; the first DCI includes one BWP group indicator field, the BWP group indicator field is used to indicate an index of one BWP group, and the BWP group includes at least one BWP on each of the N carriers; or the first DCI includes N BWP indicator fields, and the N BWP indicator fields are used to indicate N BWPs on the N carriers.

It may be understood that the foregoing units may also be referred to as modules, circuits, or the like, and the foregoing units may be independently disposed, or may be all or partially integrated. The transceiver unit 510 may also be referred to as a communication interface.

Optionally, the communication apparatus 500 may further include a storage unit. The storage unit is configured to store data or instructions (which may also be referred to as code or a program). The foregoing units may interact with or be coupled to the storage unit, to implement a corresponding method or function. For example, a processing unit may read the data or the instructions in the storage unit, so that the communication apparatus implements the methods in the foregoing embodiments.

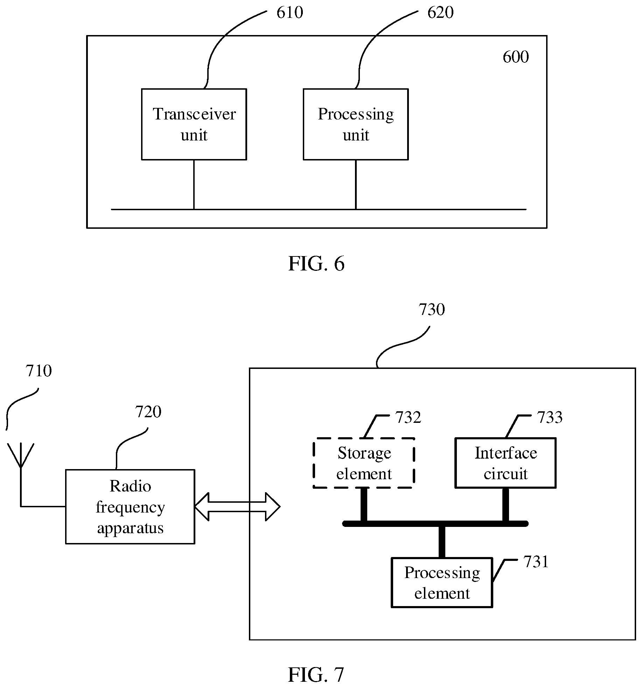

FIG. 6 is a schematic diagram of a communication apparatus according to an embodiment of this application. The apparatus is configured to implement the steps performed by the corresponding terminal device in the method embodiment in FIG. 3 or FIG. 4. As shown in FIG. 6, the apparatus 600 includes a transceiver unit 610 and a processing unit 620.

In a first embodiment:
The transceiver unit 610 is configured to: receive first signaling from a network device on a downlink primary component carrier, where the first signaling includes configuration information of a secondary cell, and the configuration information of the secondary cell includes information about a downlink secondary component carrier, or includes information about a downlink secondary component carrier and information about an uplink secondary component carrier; receive second signaling from the network device, where the second signaling is used by the terminal device to activate the secondary cell; and send a channel state information CSI report and/or feedback signaling to the network device, where the feedback signaling is used to indicate feedback information of the second signaling. The processing unit 620 is configured to perform downlink synchronization with the downlink secondary component carrier based on time-frequency domain synchronization information of the downlink primary component carrier and configuration information of the downlink secondary component carrier, where the time-frequency domain synchronization information of the downlink primary component carrier is the same as time-frequency domain synchronization information of the downlink secondary component carrier, or a difference between the time-frequency domain synchronization information of the downlink primary component carrier and time-frequency domain synchronization information of the downlink secondary component carrier is less than a first threshold; and a CSI value of the downlink primary component carrier is the same as a CSI value of the downlink secondary component carrier, or a difference between a CSI value of the downlink primary component carrier and a CSI value of the downlink secondary component carrier is less than a second threshold.

In a possible implementation method, the first signaling is media access control control element MAC CE signaling, radio resource control RRC signaling, or downlink control information DCI signaling.

In a possible implementation method, the second signaling is MAC CE signaling.

In a second embodiment:
The transceiver unit 610 is configured to receive first downlink control information DCI from a network device, where the first DCI is used to schedule M data channels, the M data channels are mapped to N carriers, the N carriers are used for data transmission on the M data channels, one of the M data channels is mapped to at least one carrier of the N carriers, M is a positive integer, and N is an integer greater than 1. The processing unit 620 is configured to communicate with the network device on at least one of the N carriers based on the first DCI.

In a possible implementation method, the transceiver unit 610 is further configured to receive second DCI from the network device, where the second DCI is used to schedule K data channels, the K data channels are mapped to one carrier, the one carrier is used for data transmission on the K data channels, and K is a positive integer. The processing unit 620 is further configured to communicate with the network device on the one carrier based on the second DCI, where a scrambling identifier corresponding to the first DCI is different from a scrambling identifier corresponding to the second DCI.

In a possible implementation method, the first DCI includes a first identifier field, and the first identifier field is used to indicate that the first DCI is used for scheduling the N carriers.

In a possible implementation method, the transceiver unit 610 is further configured to receive radio resource control RRC signaling from the network device, where the RRC signaling is used to indicate that the first DCI is used for scheduling the N carriers.

In a possible implementation method, the N carriers include a carrier used to send the first DCI and other N-1 carriers, and the other N-1 carriers are configured by using the RRC signaling; the N carriers are configured by using the RRC signaling; the first DCI includes N-1 carrier indicator fields, the N carriers include a carrier used to send the first DCI and other N-1 carriers, and the N-1 carrier indicator fields are used to indicate the other N-1 carriers; or the first DCI includes one carrier indicator field, the carrier indicator field is used to indicate an index of one carrier group, the carrier group includes the N carriers, and the carrier group is configured by using the RRC signaling.

In a possible implementation method, the first DCI includes one BWP indicator field, and the BWP indicator field is used to indicate N BWPs that are on the N carriers and that have a same index; the first DCI includes one BWP group indicator field, the BWP group indicator field is used to indicate an index of one BWP group, and the BWP group includes at least one BWP on each of the N carriers; or the first DCI includes N BWP indicator fields, and the N BWP indicator fields are used to indicate N BWPs on the N carriers.

It may be understood that the foregoing units may also be referred to as modules, circuits, or the like, and the foregoing units may be independently disposed, or may be all or partially integrated. The transceiver unit 610 may also be referred to as a communication interface, and the processing unit 620 may also be referred to as a processor.

Optionally, the communication apparatus 600 may further include a storage unit. The storage unit is configured to store data or instructions (which may also be referred to as code or a program). The foregoing units may interact with or be coupled to the storage unit, to implement a corresponding method or function. For example, a processing unit may read the data or the instructions in the storage unit, so that the communication apparatus implements the methods in the foregoing embodiments.

It should be understood that division into the units in the apparatus is merely logical function division. During actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, the units may be separately disposed processing elements, or may be integrated into a chip of the apparatus for implementation. In addition, the units may be stored in a memory in a form of a program, and is invoked by a processing element of the apparatus to perform functions of the units. In addition, all or some of the units may be integrated together, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processing element, or may be implemented in a form of software invoked by the processing element.

For example, a unit in any one of the foregoing apparatuses may be one or more integrated circuits configured to implement the foregoing methods, for example, one or more application-specific integrated circuits (Application-Specific Integrated Circuits, ASICs), one or more microprocessors (digital signal processors, DSPs), one or more field programmable gate arrays (Field Programmable Gate Arrays, FPGAs), or a combination of at least two of the integrated circuits. For another example, when the units in the apparatus may be implemented by scheduling a program by a processing element, the processing element may be a general-purpose processor, for example, a central processing unit (Central Processing Unit, CPU) or another processor that can invoke the program. For still another example, the units may be integrated and implemented in a form of a system-on-a-chip (system-on-a-chip, SOC).

The foregoing unit (for example, the receiving unit) for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit (for example, the sending unit) for sending is an interface circuit of the apparatus, and is configured to send a signal to another apparatus. For example, when the apparatus is implemented in a manner of a chip, the sending unit is an interface circuit that is of the chip and that is configured to send a signal from another chip or apparatus.

FIG. 7 is a schematic diagram of a structure of a terminal device according to an embodiment of this application. The terminal device is configured to implement an operation of the terminal device in the embodiment corresponding to FIG. 3 or FIG. 4. As shown in FIG. 7, the terminal device includes an antenna 710, a radio frequency apparatus 720, and a signal processing part 730. The antenna 710 is connected to the radio frequency apparatus 720. In a downlink direction, the radio frequency apparatus 720 receives, through the antenna 710, information sent by a network device, and sends, to the signal processing part 730 for processing, the information sent by the network device. In an uplink direction, the signal processing part 730 processes information about the terminal device, and sends the processed information to the radio frequency apparatus 720. The radio frequency apparatus 720 processes the information about the terminal device, and then sends the processed information to the network device through the antenna 710.

The signal processing part 730 is configured to process data at each communication protocol layer. The signal processing part 730 may be a subsystem of the terminal device. The terminal device may further include another subsystem, for example, a central processing subsystem, configured to implement processing on an operating system and an application layer of the terminal device. For another example, a peripheral subsystem is configured to implement a connection to another device. The signal processing part 730 may be a separately disposed chip. Optionally, the foregoing apparatus may be located in the signal processing part 730.

The signal processing part 730 may include one or more processing elements 731, for example, include a main control CPU and another integrated circuit, and further include an interface circuit 733. In addition, the signal processing part 730 may further include a storage element 732. The storage element 732 is configured to store data and a program. The program used to perform the method performed by the terminal device in the foregoing methods may be stored or may not be stored in the storage element 732, for example, stored in a memory outside the signal processing part 730. When used, the signal processing part 730 loads the program into the cache for use. The interface circuit 733 is configured to communicate with the apparatus. The foregoing apparatus may be located in the signal processing part 730. The signal processing part 730 may be implemented by a chip. The chip includes at least one processing element and an interface circuit. The processing element is configured to perform steps in any method performed by the foregoing terminal device. The interface circuit is configured to communicate with another apparatus. In an implementation, units for implementing the steps in the foregoing methods may be implemented by scheduling a program by the processing element. For example, the apparatus includes a processing element and a storage element. The processing element invokes a program stored in the storage element, to perform the methods performed by the terminal device in the foregoing method embodiments. The storage element may be a storage element located on a same chip as the processing element, namely, an on-chip storage element.

In another implementation, a program used to perform the methods performed by the terminal device in the foregoing methods may be in a storage element that is located on a different chip from the processing unit, namely, an off-chip storage element. In this case, the processing element invokes or loads the program from the off-chip storage element to the on-chip storage element, to invoke and perform the methods performed by the terminal device in the foregoing method embodiments.

In still another implementation, units in the terminal device for implementing the steps in the foregoing methods may be configured as one or more processing elements. These processing elements are disposed in the signal processing part 730. The processing elements herein may be an integrated circuit, for example, one or more ASICs, one or more DSPs, one or more FPGAs, or a combination of these types of integrated circuits. These integrated circuits may be integrated together to form a chip.

The units for implementing the steps in the foregoing methods may be integrated together and implemented in a form of a system-on-a-chip (system-on-a-chip, SOC). The SOC chip is configured to implement the foregoing methods. At least one processing element and storage element may be integrated into the chip, and the processing element invokes a program stored in the storage element to implement the foregoing methods performed by the terminal device. Alternatively, at least one integrated circuit may be integrated into the chip, to implement the foregoing methods performed by the terminal device. Alternatively, with reference to the foregoing implementations, functions of some units may be implemented by invoking a program by the processing element, and functions of some units may be implemented by the integrated circuit.

It can be learned that the foregoing apparatus may include at least one processing element and an interface circuit. The at least one processing element is configured to perform any method that is provided in the foregoing method embodiments and performed by the terminal device. The processing element may perform some or all steps performed by the terminal device in a first manner, to be specific, by invoking a program stored in the storage element; or may perform some or all steps performed by the terminal device in a second manner, to be specific, by using a hardware integrated logic circuit in the processing element in combination with instructions; or may certainly perform, by combining the first manner and the second manner, some or all steps performed by the terminal device.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits. The storage element may be one memory, or may be a general term of a plurality of storage elements.

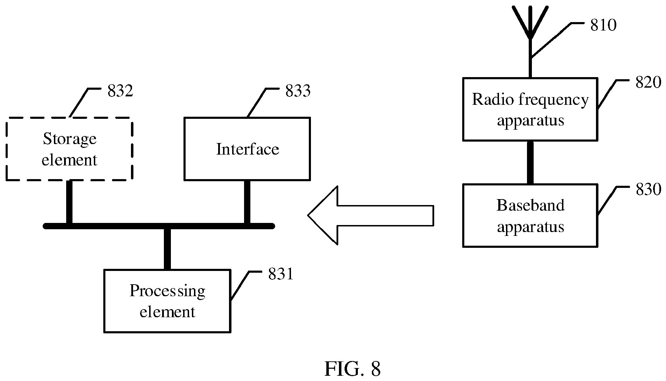

FIG. 8 is a schematic diagram of a structure of a network device according to an embodiment of this application. The network device is configured to implement an operation of the network device in the embodiment corresponding to FIG. 3 or FIG. 4. As shown in FIG. 8, the network device includes an antenna 810, a radio frequency apparatus 820, and a baseband apparatus 830. The antenna 810 is connected to the radio frequency apparatus 820. In an uplink direction, the radio frequency apparatus 820 receives, through the antenna 810, information sent by a terminal device, and sends, to the baseband apparatus 830, the information sent by the terminal device for processing. In a downlink direction, the baseband apparatus 830 processes information about the terminal device, and sends the processed information to the radio frequency apparatus 820. The radio frequency apparatus 820 processes the information about the terminal device, and then sends processed the information to the terminal device through the antenna 810.

The baseband apparatus 830 may include one or more processing elements 831, for example, include a main control CPU and another integrated circuit, and further include an interface 833. In addition, the baseband apparatus 830 may further include a storage element 832. The storage element 832 is configured to store a program and data. The interface 833 is configured to exchange information with the radio frequency apparatus 820. The interface is, for example, a common public radio interface (common public radio interface, CPRI). The foregoing apparatus used in the network device may be located in the baseband apparatus 830. For example, the foregoing apparatus used in the network device may be a chip on the baseband apparatus 830. The chip includes at least one processing element and an interface circuit. The processing element is configured to perform the steps in any method performed by the network device. The interface circuit is configured to communicate with another apparatus. In an implementation, units in the network device for implementing the steps in the foregoing methods may be implemented by scheduling a program by the processing element. For example, the apparatus used in the network device includes a processing element and a storage element. The processing element invokes a program stored in the storage element, to perform the methods performed by the network device in the foregoing method embodiments. The storage element may be a storage element located on a same chip as the processing element, namely, an on-chip storage element; or may be a storage element that is located on a different chip from the processing element, namely, an off-chip storage element.

In another implementation, units in the network device for implementing the steps in the foregoing methods may be configured as one or more processing elements. The processing elements are disposed in the baseband apparatus. The processing element herein may be an integrated circuit, for example, one or more ASICs, one or more DSPs, one or more FPGAs, or a combination of the types of integrated circuits. These integrated circuits may be integrated together to form a chip.

The units in the network device for implementing the steps in the foregoing methods may be integrated together and implemented in a form of a system-on-a-chip (system-on-a-chip, SOC). For example, the baseband apparatus includes the SOC chip, configured to implement the foregoing methods. At least one processing element and storage element may be integrated into the chip, and the processing element invokes a program stored in the storage element to implement the foregoing methods performed by the network device. Alternatively, at least one integrated circuit may be integrated into the chip, to implement the foregoing methods performed by the network device. Alternatively, with reference to the foregoing implementations, functions of some units may be implemented by invoking a program by the processing element, and functions of some units may be implemented by the integrated circuit.

It can be learned that the foregoing apparatus used in the network device may include at least one processing element and an interface circuit. The at least one processing element is configured to perform any method that is provided in the foregoing method embodiments and performed by the network device. The processing element may perform some or all steps performed by the network device in a first manner, to be specific, by invoking a program stored in the storage element; or may perform some or all steps performed by the network device in a second manner, to be specific, by using a hardware integrated logic circuit in the processing element in combination with instructions; or may certainly perform, by combining the first manner and the second manner, some or all steps performed by the network device.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits. The storage element may be one memory, or may be a general term of a plurality of storage elements.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may understand that first, second, third, fourth, and various reference numerals in this application are for distinguishing only for ease of description, and are not used to limit a scope of embodiments of this application, or represent a sequence. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. The term "at least one" means one or more. At least two means two or more. "At least one", "any one", or a similar expression thereof means any combination of these items, including any combination of singular items (pieces) or plural items (pieces). For example, at least one (piece, or type) of a, b, or c may indicate: a, b, c, a and b, a and c, b and c, or a, b, and c, where a, b, and c may be singular or plural. The term "a plurality of' means two or more, and another quantifier is similar to this.

The various illustrative logical units and circuits described in embodiments of this application may implement or operate the described functions through a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

In one or more example designs, the functions described in this application may be implemented by using hardware, software, firmware, or any combination thereof. If the functions are implemented by using software, the functions may be stored in a computer-readable medium or are transmitted to the computer-readable medium in a form of one or more instructions or code. The computer-readable medium includes a computer storage medium and a communication medium that enables a computer program to be transferred from one place to another. The storage medium may be an available medium that may be accessed by any general-purpose or special computer. For example, such a computer-readable medium may include but is not limited to a RAM, a ROM, an EEPROM, a CD-ROM, or another optical disc storage, a disk storage or another magnetic storage apparatus, or any other medium that may be used to bear or store program code, where the program code is in a form of instructions or a data structure or in a form that can be read by a general-purpose or special computer or a general-purpose or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in a defined computer-readable medium. The disk (disk) and the disc (disc) include a compact disc, a laser disc, an optical disc, a digital versatile disc (English: Digital Versatile Disc, DVD for short), a floppy disk, and a Blu-ray disc. The disc usually copies data by a magnetic means, and the disk usually copies data optically by a laser means. The foregoing combination may also be included in the computer-readable medium.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application. According to the foregoing descriptions of this specification in this application, technologies in the art may use or implement the content of this application. Any modification based on the disclosed content shall be considered obvious in the art. The basic principles described in this application may be applied to other variations without departing from the inventive essence and scope of this application. Therefore, the content disclosed in this application is not limited to the described embodiments and designs but may also be extended to a maximum scope that is consistent with the principles and disclosed new features of this application.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clearly that, a person skilled in the art can make various modifications and variations to this application without departing from the scope of this application. In this way, this application is intended to cover these modifications and variations of this application provided that they fall within the scope of protection defined by the following claims and their equivalent technologies.

## Claims

1. A communication method, comprising:
sending, by a network device, first signaling to a terminal device on a downlink primary component carrier, wherein the first signaling comprises configuration information of a secondary cell, and the configuration information of the secondary cell comprises information about a downlink secondary component carrier, or comprises information about a downlink secondary component carrier and information about an uplink secondary component carrier;
sending, by the network device, second signaling to the terminal device, wherein the second signaling is used by the terminal device to activate the secondary cell; and
determining, by the network device based on a channel state information CSI report and/or feedback signaling received from the terminal device, that the terminal device successfully activates the secondary cell, wherein the feedback signaling is used to indicate feedback information of the second signaling;
time-frequency domain synchronization information of the downlink primary component carrier is the same as time-frequency domain synchronization information of the downlink secondary component carrier, or a difference between time-frequency domain synchronization information of the downlink primary component carrier and time-frequency domain synchronization information of the downlink secondary component carrier is less than a first threshold; and
a CSI value of the downlink primary component carrier is the same as a CSI value of the downlink secondary component carrier, or a difference between a CSI value of the downlink primary component carrier and a CSI value of the downlink secondary component carrier is less than a second threshold.

2. The method according to claim 1, wherein the determining, by the network device based on a CSI report and/or feedback signaling received from the terminal device, that the terminal device successfully activates the secondary cell comprises:
if the network device receives the CSI report from the terminal device, and the CSI report is a valid CSI report, determining that the terminal device successfully activates the secondary cell;
determining, by the network device at a first moment, that the terminal device successfully activates the secondary cell, wherein an interval between the first moment and time at which the feedback signaling is received is greater than or equal to first specified duration; or
if the network device receives the CSI report at a second moment, and the CSI report is a valid CSI report, determining that the terminal device successfully activates the secondary cell, wherein an interval between the second moment and time at which the feedback signaling is received is greater than or equal to second specified duration.

3. The method according to claim 2, wherein the first specified duration is equal to (a quantity of slots in one subframe that correspond to a subcarrier spacing + 1) ^{∗} duration of one slot, the subcarrier spacing is a subcarrier spacing corresponding to a physical uplink control channel PUCCH, and the PUCCH is used to carry the feedback information of the second signaling; and/or
the second specified duration is equal to (a quantity of slots in one subframe that correspond to a subcarrier spacing + 1) ^{∗} duration of one slot, the subcarrier spacing is a subcarrier spacing corresponding to a PUCCH, and the PUCCH is used to carry the feedback information of the second signaling.

4. The method according to any one of claims 1 to 3, wherein the first signaling is media access control control element MAC CE signaling, radio resource control RRC signaling, or downlink control information DCI signaling.

5. The method according to any one of claims 1 to 4, wherein the second signaling is MAC CE signaling, radio resource control RRC signaling, or downlink control information DCI signaling.

6. A communication method, comprising:
receiving, by a terminal device, first signaling from a network device on a downlink primary component carrier, wherein the first signaling comprises configuration information of a secondary cell, and the configuration information of the secondary cell comprises information about a downlink secondary component carrier, or comprises information about a downlink secondary component carrier and information about an uplink secondary component carrier;
receiving, by the terminal device, second signaling from the network device, wherein the second signaling is used by the terminal device to activate the secondary cell; and
sending, by the terminal device, a channel state information CSI report and/or feedback signaling to the network device, wherein the feedback signaling is used to indicate feedback information of the second signaling;
time-frequency domain synchronization information of the downlink primary component carrier is the same as time-frequency domain synchronization information of the downlink secondary component carrier, or a difference between time-frequency domain synchronization information of the downlink primary component carrier and time-frequency domain synchronization information of the downlink secondary component carrier is less than a first threshold; and
a CSI value of the downlink primary component carrier is the same as a CSI value of the downlink secondary component carrier, or a difference between a CSI value of the downlink primary component carrier and a CSI value of the downlink secondary component carrier is less than a second threshold.

7. The method according to claim 6, wherein the first signaling is media access control control element MAC CE signaling, radio resource control RRC signaling, or downlink control information DCI signaling.

8. The method according to claim 6 or 7, wherein the second signaling is MAC CE signaling, radio resource control RRC signaling, or downlink control information DCI signaling.

9. A communication method, comprising:
determining, by a network device, first downlink control information DCI, wherein the first DCI is used to schedule M data channels, the M data channels are mapped to N carriers, the N carriers are used for data transmission on the M data channels, one of the M data channels is mapped to at least one carrier of the N carriers, M is a positive integer, and N is an integer greater than 1; and
sending, by the network device, the first DCI to a terminal device.

10. The method according to claim 9, further comprising:
determining, by the network device, second DCI, wherein the second DCI is used to schedule K data channels, the K data channels are mapped to one carrier, the one carrier is used for data transmission on the K data channels, and K is a positive integer; and
sending, by the network device, the second DCI to the terminal device, wherein
a scrambling identifier corresponding to the first DCI is different from a scrambling identifier corresponding to the second DCI.

11. The method according to claim 9, wherein the first DCI comprises a first identifier field, and the first identifier field is used to indicate that the first DCI is used for scheduling the N carriers.

12. The method according to claim 9, further comprising:
sending, by the network device, radio resource control RRC signaling to the terminal device, wherein the RRC signaling is used to indicate that the first DCI is used for scheduling the N carriers.

13. The method according to any one of claims 9 to 12, wherein
the N carriers comprise a carrier used to send the first DCI and other N-1 carriers, and the other N-1 carriers are configured by using the RRC signaling;
the N carriers are configured by using the RRC signaling;
the first DCI comprises N-1 carrier indicator fields, the N carriers comprise a carrier used to send the first DCI and other N-1 carriers, and the N-1 carrier indicator fields are used to indicate the other N-1 carriers; or
the first DCI comprises one carrier indicator field, the carrier indicator field is used to indicate an index of one carrier group, the carrier group comprises the N carriers, and the carrier group is configured by using the RRC signaling.

14. The method according to any one of claims 9 to 13, wherein
the first DCI comprises one BWP indicator field, and the BWP indicator field is used to indicate N BWPs that are on the N carriers and that have a same index;
the first DCI comprises one BWP group indicator field, the BWP group indicator field is used to indicate an index of one BWP group, and the BWP group comprises at least one BWP on each of the N carriers; or
the first DCI comprises N BWP indicator fields, and the N BWP indicator fields are used to indicate N BWPs on the N carriers.

15. A communication method, comprising:
receiving, by a terminal device, first downlink control information DCI from a network device, wherein the first DCI is used to schedule M data channels, the M data channels are mapped to N carriers, the N carriers are used for data transmission on the M data channels, one of the M data channels is mapped to at least one carrier of the N carriers, M is a positive integer, and N is an integer greater than 1; and
communicating, by the terminal device, with the network device on at least two of the N carriers based on the first DCI.

16. The method according to claim 15, further comprising:
receiving, by the terminal device, second DCI from the network device, wherein the second DCI is used to schedule K data channels, the K data channels are mapped to one carrier, the one carrier is used for data transmission on the K data channels, and K is a positive integer; and
communicating, by the terminal device, with the network device on the one carrier based on the second DCI, wherein
a scrambling identifier corresponding to the first DCI is different from a scrambling identifier corresponding to the second DCI.

17. The method according to claim 15, wherein the first DCI comprises a first identifier field, and the first identifier field is used to indicate that the first DCI is used for scheduling the N carriers.

18. The method according to claim 15, further comprising:
receiving, by the terminal device, radio resource control RRC signaling from the network device, wherein the RRC signaling is used to indicate that the first DCI is used for scheduling the N carriers.

19. The method according to any one of claims 15 to 18, wherein
the N carriers comprise a carrier used to send the first DCI and other N-1 carriers, and the other N-1 carriers are configured by using the RRC signaling;
the N carriers are configured by using the RRC signaling;
the first DCI comprises N-1 carrier indicator fields, the N carriers comprise a carrier used to send the first DCI and other N-1 carriers, and the N-1 carrier indicator fields are used to indicate the other N-1 carriers; or
the first DCI comprises one carrier indicator field, the carrier indicator field is used to indicate an index of one carrier group, the carrier group comprises the N carriers, and the carrier group is configured by using the RRC signaling.

20. The method according to any one of claims 15 to 19, wherein
the first DCI comprises one BWP indicator field, and the BWP indicator field is used to indicate N BWPs that are on the N carriers and that have a same index;
the first DCI comprises one BWP group indicator field, the BWP group indicator field is used to indicate an index of one BWP group, and the BWP group comprises at least one BWP on each of the N carriers; or
the first DCI comprises N BWP indicator fields, and the N BWP indicator fields are used to indicate N BWPs on the N carriers.

21. A communication apparatus, comprising a processor and an interface circuit, wherein the interface circuit is configured to communicate with another apparatus, and the processor is configured to perform the method according to any one of claims 1 to 5.

22. A communication apparatus, comprising a processor and an interface circuit, wherein the interface circuit is configured to communicate with another apparatus, and the processor is configured to perform the method according to any one of claims 6 to 8.

23. A communication apparatus, comprising a processor and an interface circuit, wherein the interface circuit is configured to communicate with another apparatus, and the processor is configured to perform the method according to any one of claims 9 to 14.

24. A communication apparatus, comprising a processor and an interface circuit, wherein the interface circuit is configured to communicate with another apparatus, and the processor is configured to perform the method according to any one of claims 15 to 20.

25. A communication system, comprising a network device configured to perform the method according to any one of claims 1 to 5, and a terminal device configured to perform the method according to any one of claims 6 to 8.

26. A communication system, comprising a network device configured to perform the method according to any one of claims 9 to 14, and a terminal device configured to perform the method according to any one of claims 15 to 20.

27. A computer-readable storage medium, wherein the computer-readable storage medium stores a computer program or instructions; and when the computer program or the instructions is or are executed, the method according to any one of claims 1 to 20 is performed.

28. A computer program product, wherein the computer program product comprises a computer program; and when the computer program is run, the method according to any one of claims 1 to 20 is performed.
